(19)

Europäisches
Patentamt
European
Patent Office
Office européen
des brevets

(11) **EP 2 025 731 A1**

(12) **EUROPEAN PATENT APPLICATION**

(43) Date of publication:
**18.02.2009 Bulletin 2009/08**

(21) Application number: **07113884.6**

(22) Date of filing: **06.08.2007**

(51) Int Cl.:
**C09K 5/10** *(2006.01)*

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Solvay Solexis S.p.A.
20121 Milano (IT)**

(72) Inventors:
• **Srinivasan, Padmanabhan
20135, MILANO (IT)**

• **Bassi, Mattia
20146, MILANO (IT)**
• **Farina, Francesca
20030, LENTATE SUL SEVESO (MI) (IT)**
• **Spataro, Gianfranco
20035, LISSONE (IT)**
• **Carignano, Gabriella
20020, ARESE (MI) (IT)**

(74) Representative: **Jacques, Philippe et al
Solvay S.A.
Département de la Propriété Industrielle,
Rue de Ransbeek, 310
1120 Bruxelles (BE)**

(54) **Heat Transfer fluid**

(57) The invention pertains to a heat transfer composition comprising:
- at least one fluorinated ether fluid free from functional groups (fluid (H));
- from 0.01 to 5 % wt with respect to fluid (H) of at least one solid nano-sized additive chosen among metal, metal oxide or carbonaceous material particles, having an average particle size of less than 2 000 nm (additive (N));

- from 0.1 to 10 % wt with respect to fluid (H) of at least one functional (per)fluoropolyether comprising recurring units (R1), said recurring units comprising at least one ether linkage in the main chain and at least one fluorine atom (fluoropolyoxyalkene chain) and comprising at least one functional group (functional PFPE (F)).

EP 2 025 731 A1

**Description**

**Technical Field**

The present invention relates to dispersion compositions comprising fluorinated ether fluid, perfluoropolyether dispersant and fine particles. These dispersion compositions have improved thermal conductivity properties, which may translate to improved energy efficiency performance in a variety of heat transfer dependant applications. Such applications include vapor compression air conditioning and refrigeration systems of all types, secondary heat transfer fluids, and other heating or cooling fluid applications.

**Background Art**

Heat transfer media have applications in both heating and cooling, including refrigeration, air conditioning, computer processors, thermal storage systems, heating pipes, fuel cells, and hot water and steam systems. Heat transfer media include a wide range of liquid or phase changing materials, including water, aqueous brines, alcohols, glycols, ammonia, hydrocarbons, ethers, and various halogen derivatives of these materials, such as chlorofluorocarbons (CFCs), hydrochlorofluorocarbons (HCFCs), (per)fluorinated polyethers (PFPE), and the like. These have been used alone or in combination with additives, such as refrigerant oil additives for lubrication and composites of fluids to affect boiling or freezing temperature. Such media are used to transfer heat from one body to another, typically from a heat source (e.g., an vehicle engine, boiler, computer chip, or refrigerator), to a heat sink, to effect cooling of the heat source, heating of the heat sink, or to remove unwanted heat generated by the heat source. The heat transfer medium provides a thermal path between the heat source and the heat sink, and may be circulated through a loop system or other flow system to improve heat flow.
Several criteria have been used for selecting heat transfer media for specific applications. Exemplary criteria include the influence of temperature on heat transfer capacity and viscosity, and the energy required to pump the medium through a heat transfer system. Specific parameters describing the comparative performance of a heat transfer medium are density, thermal conductivity, specific heat, and kinematic viscosity. The maximization of the heat transfer capability of any heat transfer system is important to the overall energy efficiency, material resource minimization, and system costs.
Completely or partially fluorinated fluids are widely used as heat transfer fluids in reliability testing of electronics, semiconductors manufacturing, vapour phase soldering and similar industries where their outstanding chemical inertness and dielectric properties are exploited. Thanks to their high chemical thermal and thermo-oxidative stability, non-toxicity and non-flammability, these fluids are used where safety concerns exist. In this view, heat transfer fluids based on perfluoropolyether structures have drawn increasing attention; their low ozone depletion potential is a peculiar feature of these fluorinated fluids that make them particularly attractive from an environmental point of view.
Environmental concerns regarding excessive energy consumption have prompted many industries to modify their commercial products and/or equipment designs to conserve energy. Consistent with the objective of energy conservation, improvements in performances of heat exchange fluids are constantly sought in the refrigeration and heat exchange fluids industries.
An approach that has been pursued in the art for maximizing thermal conductivity is to add to the heat transfer fluid suitable filler materials being thermally conductive to enhance the thermal conductivity of the heat transfer medium.
With this aim, nanoparticles have gained increased attention, as the high surface area of such materials maximizes their effect on heat exchange without negatively affecting liquid viscosity.
Thus, US 6432320 (BONSIGNORE ET AL.) 13.08.2002 discloses compositions comprising a heat transfer media (e.g. a fluorinated heat transfer medium) and a chemically stabilized nano-particle size powder. Suitable powders include those of copper, beryllium, titanium, nickel, iron, alloys or blends thereof, and carbon, modified by surface complexation or physical adsorption with a chemical agent, so as to form a colloidal dispersion which exhibits enhanced heat transfer capacity and thermal conductivity.
Also, US 2006027484 (DU PONT DE NEMOURS) 09.02.2006 discloses dispersion compositions comprising synthetic oils or other heat transfer fluids (e.g. fluorine containing refrigerants, in particular HCFC and HFC), fine particles and a dispersant. The dispersion compositions have improved thermal conductivity properties, which may translate to improved energy efficiency performance in a variety of heat transfer applications.
Nevertheless, these solutions have encountered significant issues in industrial implementation. Actually, obtaining stable dispersions of nano-sized metallic, metal oxide or other particles in a fluorinated heat exchange medium is not an easy task; such dispersions have a limited shelf life and undergo settling phenomena, thus practically nullifying heat exchange increase.
There is thus a current shortfall in the art of heat transfer fluids based on perfluoropolyether (PFPE) heat exchange materials which possess outstanding heat exchange properties, long shelf life and stability, and which still exhibit all advantageous features of PFPE heat exchange fluids.

Compositions comprising fluorinated compounds, in particular perfluoropolyether materials and nanoparticles have been taught in the past as magnetic fluids; See for instance US 6106946 (MATSUMOTO) 22.08.2000 US 2004182099 (IND TECH RES INST) 23.09.2004 , US 5785882 (NOK CORPORATION) 28.07.1998 , US 5558803 (NIPPON SHOKUBAI CO.) 24.09.1996 , US 5487840 (NSK LTD) 30.01.1996 , US 6815063 (NANOMAGNETICS, LTD) 09.11.2004.

**Disclosure of Invention**

It is thus on an object of the present invention a heat transfer composition comprising:

- at least one fluorinated ether fluid free from functional groups (fluid (H));
- from 0.01 to 5 % wt with respect to fluid (H) of at least one solid nano-sized additive chosen among metal, metal oxide or carbonaceous material particles, having an average particle size of less than 2 000 nm (additive (N));
- from 0.1 to 10 % wt with respect to fluid (H) of at least one functional (per)fluoropolyether comprising recurring units (R1), said recurring units comprising at least one ether linkage in the main chain and at least one fluorine atom (fluoropolyoxyalkene chain) and comprising at least one functional group (functional PFPE (F)).

The expression "at least one fluorinated ether fluid free from functional groups (fluid (H))" is meant to encompass composition comprising one or more than one (i.e. mixtures) fluid (H). In the rest of the text, the term fluid (H) shall be understood both in the singular and in the plural, so as to designate one or more than one fluid (H).

The fluid (H) of the invention is a chemical compound comprising carbon, fluorine, and one or more ether oxygen atoms. The fluid (H) can be straight-chained, branched-chained, or cyclic, or a combination thereof, such as alkylcycloaliphatic. Optionally fluid (H) can comprise hydrogen atoms and/or halogen atoms.

The fluorinated ether fluid free from functional groups (fluid (H)) preferably complies with formula (I A) or (I B) here below: $R^{H'}O-(R^H_f)_r-R^H$ (I A) $R^{H'}O-J-(O)_j-R^H$ (I B) wherein:

- $R^{H'}$ and $R^H$, equal or different from each other, are independently chosen among $-C_mF_{2m+1}$, $-C_nF_{2n+1-h}H_h$, $-C_pF_{2p+1-h'}X_{h'}$, $-C_zF_{2z}OC_yF_{2y+1}$, $-C_uF_{2u-u'}H_{u'}OC_wF_{2w+1-w'}H_{w'}$ groups, with n, m, p, z, y, u, w being integers from 1 to 8, preferably from 1 to 7, h, h', u' and w' being integers $\geq 1$, chosen so that $h \leq 2n+1$, $h' \leq 2p+1$, $u' \leq 2u$, $w' \leq 2w+1$, X being a halogen atom chosen among Cl, Br, I (preferably a chlorine atom);
- $R^H_f$ is a fluoropolyoxyalkene chain comprising repeating units $R^{Ho}$, said repeating units being chosen among the group consisting of :

    (i) -CFXO-, wherein X is F or $CF_3$,
    (ii) $-CF_2CFXO-$, wherein X is F or $CF_3$,
    (iii) $-CFXCF_2O-$, wherein X is F or $CF_3$,
    (iv) $-CF_2CF_2CF_2O-$,
    (v) $-CF_2CF_2CF_2CF_2O-$,

    - r is equal to zero or 1, preferably r being 1;
    - J is a divalent hydrocarbon radical having 1 to 12 carbon atoms, linear or branched, aliphatic or aromatic, preferably an aliphatic divalent hydrocarbon group having 1 to 6 carbon atoms, e.g. $-CH_2-$, $-CH_2CH_2-$ or $CH(CH_3)-$;
    - j is equal to zero or 1.

The fluid (H) of the invention is preferably a hydrofluoroether (fluid (HFE)), i.e. a compound comprising, in addition to carbon, fluorine, and ether oxygen atom(s), one or more hydrogen atoms.
Fluids (HFE) are particularly preferred in view of their outstanding combination of good heat transfer performances over a wide liquid temperature range along with optimum safety (non-flammability and low toxicity) and environmental (low-ozone depleting and low global warming) properties.

Fluid (HFE) typically complies with formula (IIA) or (II B) here below: $R^{H*'}O-(R^H_f)_r-R^{H*}$ (II A) $R^{H*'}O-J-(O)_j-R^{H*}$ (II B) wherein:

- $R^{H*'}$ and $R^{H*}$, equal or different from each other, are independently chosen among $-C_mF_{2m+1}$, $-C_nF_{2n+1-h}H_h$, $-C_zF_{2z}OC_yF_{2y+1}$, $-C_uF_{2u-u'}H_{u'}OC_wF_{2w+1-w'}H_{w'}$ groups, with n, m, z, y, u, w being integers from 1 to 8, preferably from 1 to 7, h, u' and w' being integers $\geq 1$, chosen so that $h \leq 2n+1$, $u' \leq 2u$, $w' \leq 2w+1$, with the provision that at least one of $R^{H*'}$ and $R^{H*}$ in formula (II A) is a $-C_nF_{2n+1-h}H_h$ group or a $-C_uF_{2u-u'}H_{u'}OC_wF_{2w+1-w'}H_{w'}$ group, as above defined;

- $R^H_f$, J, j and r have the same meaning as above defined.

According to a first embodiment of the invention, fluid (HFE) complies to formula (II A) as above described, wherein r is zero, that is to say that fluid (HFE) complies with formula (III A-1) here below (fluid (HFE-1)):

$R^{H*'}O\text{-}R^{H*}$ (III A-1), wherein $R^{H*'}$ and $R^{H*}$ have the same meaning as above described.

Representative compounds of fluids (HFE-1) described by formula (III A-1) useful in the present invention include, but are not limited to, the following compounds and mixtures thereof : $n\text{-}C_5F_{11}OC_2H_5$, $n\text{-}C_6F_{13}OCH_3$, $n\text{-}C_6F_{13}OC_2H_5$, $n\text{-}C_7F_{15}OCH_3$, $n\text{-}C_7F_{15}OC_2H_5$, $C_2F_5CF(OC_2H_5)CF(CF_3)_2$, $C_3F_7\ CF(OC_2H_5)CF(CF_3)_2$, $C_3F_7CF(OCH_3)CF(CF_3)_2$, $C_5F_{11}CF(CF_3)CF_2OCH_3$, $C_6\ F_{13}CF(CF_3)CF_2OCH_3$, $C_7F_{15}OC_2F_4H$, $C_6F_{13}OC_2F_4H$, $H(CF_2)_4O(CF_2)_4H$.

According to a second preferred embodiment of the invention, fluid (HFE) complies to formula (II A) as above described, wherein r is 1, that is to say that fluid (HFE) complies with formula (III A-2) (fluid (HFE-2)): $R^{H*'}O\text{-}R^H_f\text{-}R^{H*}$ (III A-2), wherein $R^{H*'}$, $R^H_f$, $R^{H*}$ have the same meaning as above defined.

In the fluid (HFE-2) of the second preferred embodiment of the invention, $R^H_f$ is preferably chosen among the followings:

1) $\text{-}(CF_2O)_a\text{-}(CF_2CF_2O)_b\text{-}$, with a and b being integers up to 100, a≥0, b ≥0 and a+b > 0; preferably, each of a and b being > 0, and b/a being comprised between 0.1 and 10;

2) $\text{-}(CF_2\text{-}(CF_2)_{z'}\text{-}CF_2O)_{b'}\text{-}$ , wherein z' is an integer equal to 1 or 2; b' being an integer up to 100;

3) $\text{-}(C_3F_6O)_c\text{-}(C_2F_4O)_b\text{-}(CFL_0O)_t\text{-}$ , with $L_0$ being, at each occurrence independently selected among -F and $\text{-}CF_3$; b, t, and c being integers up to 100, c > 0, b ≥ 0, t ≥0; preferably, b and t >0, c/b being comprised between 0.2 and 5.0 and (c+b)/t being comprised between 5 and 50.

In the fluid (HFE-2) of the second embodiment of the invention, $R^{H*'}$ and $R^{H*}$, equal or different from each other, are preferably independently chosen among $\text{-}C_{m°}F_{2m°+1}$, and $\text{-}C_{n°}F_{2n°}H$ groups, with n° and m° being integers from 1 to 3, with the provision that at least one of $R^{H*'}$ and $R^{H*}$ is a $\text{-}C_{n°}F_{2n°}H$ group, as above defined.

Non limitative examples of fluids (HFE-2) are those notably complying with general formulae: $HCF_2O(CF_2CF_2O)CF_2H$; $HCF_2O(CF_2CF_2O)_2CF_2H$; $HCF_2O(CF_2CF_2O)_3CF_2H$; $HCF_2O(CF_2CF_2O)_4CF_2H$; $HCF_2O(CF_2CF_2O)_3CF_2OCF_2H$; $HCF_2O(CF_2CF_2O)_4CF_2OCF_2H$; $CF_3O(CF_2CF_2O)_2CF_2H$; $CF_3O(CF_2CF_2\ O)_2(CF_2O)CF_2H$; $CF_3O(CF_2CF(CF_3)O)_2CF_2H$; $CF_3O(CF_2CF(CF_3)O)_3CF_2H$; $CF_3O(C_3F_6O)_2(CF(CF_3)O)CF_2H$; $HCF_2CF_2O(CF_2CF_2O)CF_2CF_2H$; $HCF_2CF_2OCF_2C(CF_3)_2CF_2OCF_2CF_2H$.

According to a third embodiment of the invention, fluid (HFE) complies to formula (II B) as above described, wherein $R^{H*'}$ and $R^{H*}$, equal or different from each other, are independently chosen among $\text{-}C_mF_{2m+1}$, $\text{-}C_nF_{2n+1\text{-}h}H_h$ groups and $\text{-}C_uF_{2u\text{-}u'}H_{u'}OC_wF_{2w+1\text{-}w'}H_{w'}$ groups, as above described (fluid (HFE-3)).

Non-limitative examples of fluid (HFE-3) according to this third embodiment are notably $CF_3CFHCF_2CH_2OCF_2CFHCF_3$, $CF_3CFHCF_2CH(CH_3)OCF_2CFHCF_3$, $CF_3CF(CH_2OCF_2CFHCF_3)CFHCF(CF_3)_2$, $CF_3CFHCF(CH_2OCF_2CFHCF_3)CF(CF_3)_2$, $CF_3CF[CH(CH_3)OCF_2CFHCF_3]CFHCF(CF_3)_2$, $CF_3CF[CH(CH_3)OCF_2CFHCF_3]CFHCF_2CF_3$, $CF_3CF_2CF[CH(CH_3)OCF_2CFHCF_3]CFHCF_3$, $CF_3CFHCF_2C(CH_3)_2OCF_2CFHCF_3$, $CF_3CFHCF_2CH_2OCF_2CFHOC_4F_9$, $CF_3CFHCF_2CH(OCF_2CFHCF_3)CH_2OCF_2CFHCF_3$, $CF_3CFHCF_2CH_2OCF_2CFHOC_3F_7$, $CF_3CFHCF_2CH_2OCF_2CFHOCF_3$, $CF_3CF_2CF_2OCH_2CH_2CH_2OCF_2CF_2CF_3$, $CF_3CF_2CF_2CF_2OCH_2CH_2CH_2OCF_2CF_2CF_2CF_3$, $CF_3CF_2CF_2OCH_2CH_2OCF_2CF_2CF_3$, $CF_3CF_2CF_2CF_2OCH_2CH_2CH_2OCF_2CF_2CF_2CF_3$, $CF_3CF_2CF[CF(CF_3)_2]OCH_2CH_2CH_2OCF[CF(CF_3)_2]CF_2CF_3$.

Fluids (HFE-3) according to this third embodiment of the invention are notably those disclosed in US 2007051916 (3M INNOVATIVE PROPERTIES CO) 08.03.2007 or in US 2005126756 (3M INNOVATIVE PROPERTIES CO) 16.06.2005.

Additive (N)

The term nanosized, as used therein, is intended to denote particles which have an average size of up to 2 000 nm.

Preferred particle size is influenced by a number of factors, including cost effectiveness, dispersion and settling characteristics (smaller particles tending to settle more slowly and being more easily (re)-dispersed) and easiness of handling, nanosized particles undergoing aggregation more and more significant phenomena as a function of their reduced size.

Preferred nanosized additives have an average particle size of from 1 nm to 500 nm.

Exemplary metal-based additives (N) include notably nanoparticles of copper, aluminium, titanium, nickel, beryllium, silver, gold or iron, alloys or blends, or compounds thereof. Copper, nickel, silver and beryllium are particularly preferred as metal-based additives (N).

Metal-based additives (N) particularly suitable to the purpose of the invention are those prepared according to the teachings of US 2006226564 12.10.2006 and US 2006269823 30.11.2006 , i.e. via a method comprising (i) feeding a metal, (ii) vaporizing said metal, and (iii) cooling the same, preferably by introduction of a flow of cooling fluid to interact with the vaporized metal.

Metal-based additives (N) obtained from above mentioned process are typically at least partially surrounded by a thin metal oxide coating whose presence does not substantially modify properties of the metal particle.

Metal-based additives (N) have preferably an average particle size of less than 100 nm, preferably of 5 to 80 nm, more preferably of 10 to 70 nm.

Metal-based additives (N) particularly suitable to the purposes of the invention are those sold under the trade name QUANTUMSPHERE®, e.g. QSI-Nano® Copper, QSI-Nano® Silver, QSI-Nano® Nickel from QuantumSphere, Inc.

Exemplary metal oxide-based additives (N) include notably magnesium oxide (MgO), alumina ($Al_2O_3$), silicon dioxide ($SiO_2$), titanium dioxide ($TiO_2$ ), iron dioxide ($Fe_2O_3$ or FeO), copper oxide ($Cu_2O$), Zinc oxide (ZnO), zirconium oxide ($ZrO_2$), stannic oxide ($SnO_2$) and cerium oxide ($CeO_2$).

Preferred metal oxide-based additives (N) are chosen among magnesium oxide (MgO), alumina ($Al_2O_3$), silicon dioxide ($SiO_2$), titanium dioxide ($TiO_2$ ), and Zirconium dioxide ($ZrO_2$).

Metal oxide-based additives (N) have preferably an average particle size of 1 to 500 nm, preferably of 5 to 300 nm, more preferably of 10 to 250 nm.

Exemplary carbonaceous material-based additives (N) include notably graphite, diamond, fullerene carbons of general formula $C_{2n}$, with n being an integer of at least 30 and carbon nanotubes. Particularly preferred as carbonaceous material-based additives (N) are carbon nanotubes, which exhibit outstanding potential in heat exchange enhancement.

Preferred carbon nanotubes are those having an average primary particle size from 10 to 30 nm.

The table here below summarized room temperature thermal conductivity for preferred additives (N) to be used in the composition of the invention:

**Table 1**

| Additive (N) | Intrinsic Thermal Conductivity at r.t. (W m$^{-1}$ K$^{-1}$) |
| --- | --- |
| Metal-based additives (N) | |
| Silver | 430 |
| Copper | 400 |
| Aluminium | 235 |
| Beryllium | 190 |
| Nickel | 91 |
| Metal oxide-based additives (N) | |
| silica | 1.2÷1.4 |
| MgO | 13÷15 |
| $Al_2O_3$ | 10÷12 |
| $TiO_2$ / $ZrO_2$ | 2÷4 |
| Carbonaceous-based additives | |
| graphite | 110÷190 |
| Carbon nanotubes | 1800÷2 000 |

Preferred materials for additives (N) are those having a high heat transfer coefficient and high thermal conductivity per unit weight of material. It is thus understood that additives (N) will be generally chosen among metal-based additives and carbonaceous material-based additives.

Most preferably, the additive (N) is chosen among carbon nanotubes. Both single-walled nanotubes (SWNTs), multi-walled nanotubes (MWNTs) and mixtures therefrom can be useful with success.

The expression "at least one functional (per)fluoropolyether (...) (functional PFPE (F))" is meant to encompass composition comprising one or more than one (i.e. mixtures) functional PFPE (F). In the rest of the text, the term functional PFPE (F) shall be understood both in the singular and in the plural, so as to designate one or more than one functional PFPE (F).

Preferably the functional PFPE (F) is a compound complying with formula (IV) here below :
wherein :

- each of X is independently F or $CF_3$;
- p and p', equal or different each other, are integers from 0 to 3;
- $R_f$ is a fluoropolyoxyalkene chain comprising repeating units R°, said repeating units being chosen among the group consisting of :

  (i) -CFXO-, wherein X is F or $CF_3$,
  (ii) $-CF_2CFXO-$, wherein X is F or $CF_3$,
  (iii) $-CF_2CF_2CF_2O-$,
  (iv) $-CF_2CF_2CF_2CF_2O-$,
  (v) $-(CF_2)_k-CFZ-O-$ wherein k is an integer from 0 to 3 and Z is a group of general formula $-OR_f'T_3$, wherein $R_f'$ is a fluoropolyoxyalkene chain comprising a number of repeating units from 0 to 10, said recurring units being chosen among the followings : -CFXO- , $-CF_2CFXO-$, $-CF_2CF_2CF_2$ O-, $-CF_2CF_2CF_2CF_2O-$, with each of each of X being independently F or $CF_3$; and $T_3$ is a $C_1$ - $C_3$ perfluoroalkyl group,and mixtures thereof;

  - at least one of $T_1$ and $T_2$, which are the same or different each other, is a functional group comprising a heteroatom chosen among O, S, N, P and mixtures thereof; the remaining $T_1$ or $T_2$, if any, being chosen among H, halogen atoms, $C_1$ - $C_{30}$ end-group.

  Suitable examples of $T_1$ and $T_2$ groups comprising at least one heteroatom chosen among O, S, N, P heteroatoms are those complying with formula (V):

  -Aq-E (V) wherein :
  A denotes a $C_1$-$C_{20}$ linking group; q is 0 or 1; E denotes a functional group comprising at least one heteroatom chosen among O, S, N, P and mixtures thereof.

The bivalent $C_1$-$C_{20}$ linking group A is preferably selected from the following classes :

  1. linear substituted or unsubstituted $C_1$-$C_{20}$ alkylenic chain, optionally containing heteroatoms in the alkylenic chain; preferably linear aliphatic group of formula $-(CH_2)_m-$, with m integer between 1 and 20;
  2. (alkylene)cycloaliphatic $C_1$-$C_{20}$ groups or (alkylen)aromatic $C_1$-$C_{20}$ groups, optionally containing heteroatoms in the alkylenic chain or in the ring;
  3. linear or branched polyalkylenoxy chains, comprising in particular repeating units selected from : $-CH_2CH_2O-$, $-CH_2CH(CH_3)O-$, $-(CH_2)_3O-$, $-(CH_2)_4O-$;
  4. the carbonyl group -C(O)-; and mixtures thereof.

Non limitative examples of functional groups E are notably hydroxyl group,

- $OPO(OH)_2$, $-NR''_3)X''$, with X'' being an hydroxyl or halogen atom and each of the R'' group being independently a hydrogen atom or $C_1$-$C_{20}$ alkyl group, $-SO_3)_wX'$ and/or $-COO)_wX'$, wherein X' is an alkaline or alkaline earth metal or an ammonium salt of formula $NR''_4$, with each of the R'' group being independently a hydrogen atom or $C_1$-$C_{20}$ alkyl group and w being 1 or 2 for satisfying neutrality.

Suitable examples of $T_1$ or $T_2$ non functional groups, free from O, S, N, P heteroatoms, are notably -H, -F, -Cl, $-CF_3$, $-C_2F_5$, $-CF_2Cl$, $-CF_2CF_2Cl$.

More preferably, the functional PFPE (F) suitable for the invention are chosen among the group consisting of :

  1. $[X-(CF_2CF(CF_3)O)_nCF_2COO^-]M$, with X being a halogen, preferably Cl or F, M being a univalent cation such as $H^+$, $Na^+$, $K^+$, $NH_4^+$ and n being an integer ranging between 2 and 100, preferably between 2 and 60;
  2. $[X-(CF_2CF(CF_3)O)_nCF_2COO^-]_2M''$, with X being a halogen, preferably Cl or F, M'' being a divalent cation such as $Ca^{++}$, $Mg^{++}$, $Zn^{++}$, and n being an integer ranging between 2 and 100, preferably between 2 and 60;
  3. $(HO)_2OP-O(CH_2CH_2O)_{p*}-CH_2CF_2O-(CF_2CF_2O)_{m'}(CF_2O)_{n'}-CF_2CH_2O(CH_2$

$CH_2O)_{p*}-PO(OH)_2$, m' and n' being integers, where the ratio m'/n' generally ranges between 0.1 and 10, preferably between 0.2 and 5 and the sum m'+n' ranging between 2 and 100, preferably between 2 and 60, and p* ranges between 0 and 3, preferably between 1 and 3.

    4. $HO-CH_2CF_2O(CF_2O)_{n''}(CF_2CF_2O)_{m''}CF_2CH_2-OH$, m'' and n'' being integers, where the ratio m''/n'' generally ranges between 0.1 and 10, preferably between 0.2 and 5, and the sum m''+n'' ranging between 2

and 100, preferably between 2 and 60;

    5. $HO(CH_2CH_2O)_{n*}CH_2CF_2O(CF_2O)_{n*'}(CF_2CF_2O)_{m*'}CF_2CH_2(OCH_2CH_2)_{n*}O$

H, n*, m*, and n*, being integers, where the ratio m*,/n* generally ranges between 0.1 and 10, preferably between 0.2 and 5, and n* ranges between 1 and 3, and the sum m*'+n*' ranging between 2 and 100, preferably between 2 and 60;

    6. $M'OOC-CF_2O-(CF_2O)_{n'''}(CF_2CF_2O)_{m'''}CF_2COOM$, with M being a univalent cation such as $H^+$, $Na^+$, $K^+$, $NH_4^+$ and m''' and n''' being integers, where the ratio m'''/n''' generally ranges between 0.1 and 10, preferably between 0.2 and 5, and the sum m'''+n''' ranging between 2 and 100, preferably between 2 and 60.

Particularly preferred are functional PFPEs (F) above listed under point 4, i.e. those complying with formula $HO-CH_2CF_2O(CF_2O)_{n''}(CF_2CF_2O)_{m''}CF_2 CH_2-OH$, as above described.

The invention also pertains to a process for the manufacture of the heat transfer composition as above detailed.

The process advantageously comprises mixing the fluid (H), the additive (N) and the functional PFPE (F).

Generally the three components may be intimately admixed by standard mixing devices.

Ultrasound mixing is particularly preferred, especially when carbon nanotubes are used as additive (N).

Thus, the process of the invention advantageously comprises mixing by sonication.

According to an embodiment of the invention, the process advantageously comprises:

- mixing the functional PFPE (F) with the additive (N) so as to obtain treated additive (N) particles having on their surface the functional PFPE (F); and
- dispersing the so-obtained treated additive (N) in the fluid (H).

The invention finally pertains to the use of the composition as above described for heat transfer.

The compositions of the invention, thanks to their improved thermal conductivity properties, which may translate to improved energy efficiency performance in a variety of heat transfer dependant applications, can be used with success as heat transfer media in applications such as vapour compression air conditioning and refrigeration systems of all types, secondary heat transfer fluids, and other heating or cooling fluid applications.

The invention will be now described in more detail with reference to the following examples whose purpose is merely illustrative and not limitative of the scope of the invention.

Raw materials

As additive (N), two types of carbon nanotubes were used: a multi wall carbon nanotube (MWCNT), namely BAYTUBES® C150 P available from Bayer Material Science AG and a single wall carbon nanotube (SWCNT), commercially available from Sigma-Aldrich.

As functional PFPE (F), FOMBLIN®ZDOL 2000 (complying with formula $HO-CH_2CF_2O(CF_2O)_{n''}(CF_2CF_2O)_{m''}CF_2CH_2-OH$ and having an average molecular weight of 2 000), commercially available from Solvay Solexis S.p.A. was used.

As fluid (H) used was made of H-GALDEN® ZT130 (mixture of hydrofluoroether having boiling point of 130°C, mainly complying with formula $HCF_2O(CF_2CF_2O)_3CF_2OCF_2H$) and GALDEN® HT 170 (represented by formula $CF_3O(CF_2-CF(CF_3)O)_n(CF_2O)_mCF_3$ wherein n/m=20 having average molecular weight 450), all commercially available from Solvay Solexis S.p.A..

**Preparation of the dispersions**

All dispersions were prepared according to the following procedure: weighed amounts of carbon nanotube and dispersing agent were added to the base fluid; the mixture was stirred with a Vibromixer and then treated with an ultrasound disintegrator (Hielscher UP 200S, power=200W, operating frequency=24kHz) for 5 minutes at 0°C in order to avoid overheating and consequent evaporation of the fluid.

The stability of the dispersions was checked after the preparation by centrifugation at 1000 rpm for 5 minutes: the dispersion is considered stable if no precipitate is observed after centrifugation.

The different compositions of the dispersions prepared are summarized in Table 2 (Examples 1-8). All these dispersions were stable, according to the above reported stability test.

Comparative compositions of examples 1C to 4C, free from additive (N) were also tested for stability and/or thermal conductivity.

Comparative compositions of examples 5C and 6C were found as not possessing a suitable stability in above mentioned test. It was thus not possible to properly examine their thermal properties.

Thermal conductivity measurements were carried out following the hot wire method as detailed, e.g. in ASTM C 1113-99 standard.

The apparatus for the measurement of the thermal conductivity of compositions was based on the principles stated in the ASTM methods D5930 (Standard Test Method for Thermal Conductivity of Plastics by Means Transient Line-Source Technique) and C1113 of a (Standard Test Method for Thermal Conductivity of Refractories by Hot Wire (Platinum Resistance Thermometer Technique), with some refinements suggested by the literature on the transient hot-wire method on liquid samples.

Thermal conductivity of the composition was evaluated by monitoring the transient temperature rise of a thin Platinum wire, obtained from the measurement of the wire electrical resistance versus time, the rate of heating of the wire being related to the thermal properties of the fluid.

Results obtained are summarized in Table 3.

**Table 2**

| Example | Multiwall CNT (g) | Singlewall CNT (g) | Functional PFPE (F) (g) | Fluid (H) Type[§] & quantity (g) | |
|---|---|---|---|---|---|
| 1C | - | - | - | (1) | 100 |
| 2C | - | - | 100 | - | - |
| 3C | - | - | 1 | (1) | 99 |
| 4C | - | - | 10 | (1) | 90 |
| 5C | 0.1 | - | - | (1) | 99.9 |
| 6C | - | 0.1 | - | (1) | 99.9 |
| 1 | 0.1 | - | 1 | (1) | 98.9 |
| 2 | 0.1 | - | 1 | (2) | 98.9 |
| 3 | - | 0.1 | 1 | (1) | 98.9 |
| 4 | 0.1 | - | 10 | (1) | 89.9 |
| 5 | - | 0.1 | 10 | (1) | 89.9 |
| 6 | - | 0.3 | 10 | (1) | 89.7 |
| 7 | - | 0.5 | 10 | (1) | 89.5 |
| 8 | - | 1 | 10 | (1) | 89.5 |

(§): (1) denotes H-GALDEN® ZT 130 hydrofluoroether; (2) denotes GALDEN® HT 170.

Table 3

| Heat exchange fluid composition | $\lambda$ (W/mK) | Std devl (W/mK) | $\Delta\lambda/\lambda$(%) |
|---|---|---|---|
| 1C | 0.073 | 0.014 | - |
| 2C | 0.089 | 0.009 | - |
| 3C | 0.071 | 0.005 | - |
| 1 | 0.077 | 0.004 | 8 |
| 3 | 0.076 | 0.003 | 7 |
| 4C | 0.075 | 0.005 | - |
| 6 | 0.086 | 0.004 | 15 |
| 8 | 0.082 | 0.002 | 9 |

**Claims**

1. A heat transfer composition comprising:

 - at least one fluorinated ether fluid free from functional groups (fluid (H));
 - from 0.01 to 5 % wt with respect to fluid (H) of at least one solid nano-sized additive chosen among metal, metal oxide or carbonaceous material particles, having an average particle size of less than 2 000 nm (additive (N));
 - from 0.1 to 10 % wt with respect to fluid (H) of at least one functional (per)fluoropolyether comprising recurring units (R1), said recurring units comprising at least one ether linkage in the main chain and at least one fluorine atom (fluoropolyoxyalkene chain), and comprising at least one functional group (functional PFPE (F)).

2. The composition of claim 1, wherein the fluid (H) complies with formula (I A) or (I B) here below: $R^{H'}O-(R^H_f)_r-R^H$(I A) $R^{H'}O-J-(O)_j-R_H$(I B) wherein:

 - $R^{H'}$ and $R^H$, equal or different from each other, are independently chosen among $-C_mF_{2m+1}$, $-C_nF_{2n+1-h}H_h$, $-C_pF_{2p+1-h'}X_{h'}$, $-C_zF_{2z}OC_yF_{2y+1}$,$-C_uF_{2u-u'}H_{u'}OC_wF_{2w+1-w'}H_{w'}$ groups, with n, m, p, z, y, u, w being integers from 1 to 8, preferably from 1 to 7, h, h', u' and w' being integers $\geq 1$, chosen so that $h \leq 2n+1$, $h' \leq 2p+1$, $u' \leq 2u$, $w' \leq 2w+1$, X being a halogen atom chosen among Cl, Br, I (preferably a chlorine atom);
 - $R^H_f$ is a fluoropolyoxyalkene chain comprising repeating units $R^{Ho}$, said repeating units being chosen among the group consisting of :

 (i) -CFXO-, wherein X is F or $CF_3$,
 (ii) -CF$_2$CFXO-, wherein X is F or $CF_3$,
 (iii) -CFXCF$_2$O-, wherein X is F or $CF_3$,
 (iv)-CF$_2$CF$_2$CF$_2$O-,
 (v) -CF$_2$CF$_2$CF$_2$CF$_2$O-;

 - r is equal to zero or 1, preferably r being 1;
 - J is a divalent hydrocarbon radical having 1 to 12 carbon atoms, linear or branched, aliphatic or aromatic, preferably an aliphatic divalent hydrocarbon group having 1 to 6 carbon atoms, e.g. -CH$_2$- , -CH$_2$CH$_2$- or -CH(CH$_3$)-;
 - j is equal to zero or 1.

3. The composition of claim 2, wherein the fluid (H) is a hydrofluoroether (fluid (HFE)), i.e. a compound comprising, in addition to carbon, fluorine, and ether oxygen atom(s), one or more hydrogen atoms.

4. The composition of claim 3, wherein the fluid (HFE) complies with formula (IIA) or (II B) here below:

$$R^{H*'}O-(R^H_f)_r-R^{H*} \text{ (II A) } R^{H*'}O-J-(O)_j-R^{H*} \text{ (II B)}$$

wherein:

 - $R^{H*'}$ and $R^{H*}$, equal or different from each other, are independently chosen among $-C_mF_{2m+1}$, $-C_nF_{2n+1-h}H_h$, $-C_zF_{2z}OC_yF_{2y+1}$, $-C_uF_{2u-u'}H_{u'}OC_wF_{2w+1-w'}H_{w'}$ groups, with n, m, z, y, u, w being integers from 1 to 8, preferably from 1 to 7, h, u' and w' being integers $\geq 1$, chosen so that $h \leq 2n+1$, $u' \leq 2u$, $w' \leq 2w+1$, with the provision that at least one of $R^{H*'}$ and $R^{H*}$ in formula (II A) is a $-C_nF_{2n+1-h}H_h$ group or a $-C_uF_{2u-u'}H_{u'}OC_wF_{2w+1-w'}H_{w'}$ group, as above defined;
 - $R^H_f$, J, j and r have the same meaning as above defined.

5. The composition of claim 4, wherein fluid (HFE) complies to formula (II A) as above described, wherein r is 1.

6. The composition of claim 5, wherein $R^H_f$ is preferably chosen among the followings:

 1) $-(CF_2O)_a-(CF_2CF_2O)_b-$, with a and b being integers up to 100, a$\geq$0, b $\geq$0 and a+b > 0; preferably, each of a and b being > 0, and b/a being comprised between 0.1 and 10;

2) $-(CF_2-(CF_2)_{z'}-CF_2O)_{b'}-$ , wherein z' is an integer equal to 1 or 2; b' being an integer up to 100;

3) $-(C_3F_6O)_c-(C_2F_4O)_b-(CFL_0O)_t-$ , with $L_0$ being, at each occurrence independently selected among -F and $-CF_3$; b, t, and c being integers up to 100, c > 0, b $\geq$ 0, t$\geq$0; preferably, b and t >0, c/b being comprised between 0.2 and 5.0 and (c+b)/t being comprised between 5 and 50.

7. The composition according to anyone of the preceding claims, wherein the additive (N) is chosen among carbon nanotubes.

8. The composition according to anyone of the preceding claims, wherein the functional PFPE (F) is a compound complying with formula (IV) here below :

$$T_1-(CFX)_p-O-R_f-(CFX)_{p'}-T_2 \text{ (IV)}$$

wherein :

each of X is independently F or $CF_3$;

p and p', equal or different each other, are integers from 0 to 3; $R_f$ is a fluoropolyoxyalkene chain comprising repeating units R°, said repeating units being chosen among the group consisting of :

(i) $-CFXO-$, wherein X is F or $CF_3$,
(ii) $-CF_2CFXO-$, wherein X is F or $CF_3$,
(iii) $-CF_2CF_2CF_2O-$,
(iv) $-CF_2CF_2CF_2CF_2O-$,
(v) $-(CF_2)_k-CFZ-O-$ wherein k is an integer from 0 to 3 and Z is a group of general formula $-OR_f'T_3$, wherein $R_f'$ is a fluoropolyoxyalkene chain comprising a number of repeating units from 0 to 10, said recurring units being chosen among the followings : $-CFXO-$ , $-CF_2CFXO-$, $-CF_2CF_2CF_2O-$, $-CF_2CF_2CF_2CF_2O-$, with each of each of X being independently F or $CF_3$; and $T_3$ is a $C_1 - C_3$ perfluoroalkyl group, and mixtures thereof;

at least one of $T_1$ and $T_2$, which are the same or different each other, is a functional group comprising a heteroatom chosen among O, S, N, P and mixtures thereof; the remaining $T_1$ or $T_2$, if any, being chosen among H, halogen atoms, $C_1 - C_{30}$ end-group.

9. The composition according to claim 8, wherein the functional PFPE (F) suitable for the invention are chosen among the group consisting of :

1. $[X-(CF_2CF(CF_3)O)_nCF_2COO^-]M$, with X being a halogen, preferably Cl or F, M being a univalent cation such as $H^+$, $Na^+$, $K^+$, $NH_4^+$ and n being an integer ranging between 2 and 100, preferably between 2 and 60;

2. $[X-(CF_2CF(CF_3)O)_nCF_2COO^-]_2M''$, with X being a halogen, preferably Cl or F, M'' being a divalent cation such as $Ca^{++}$, $Mg^{++}$, $Zn^{++}$, and n being an integer ranging between 2 and 100, preferably between 2 and 60;

3. $(HO)_2OP-O(CH_2CH_2O)_{p*}-CH_2CF_2O-(CF_2CF_2O)_{m'}(CF_2O)_{n'}-CF_2CH_2O(CH_2CH_2 O)_{p*}-PO(OH)_2$, m' and n' being integers, where the ratio m'/n' generally ranges between 0.1 and 10, preferably between 0.2 and 5 and the sum m'+n' ranging between 2 and 100, preferably between 2 and 60, and $p^*$ ranges between 0 and 3, preferably between 1 and 3.

4. $HO-CH_2CF_2O(CF_2O)_{n''}(CF_2CF_2O)_{m''}CF_2CH_2-OH$, m'' and n'' being integers, where the ratio m''/n'' generally ranges between 0.1 and 10, preferably between 0.2 and 5, and the sum m''+n'' ranging between 2 and 100, preferably between 2 and 60;

5. $HO(CH_2CH_2O)_{n*}CH_2CF_2O(CF_2O)_{n*'}(CF_2CF_2O)_{m*'}CF_2CH_2(OCH_2CH_2)_{n*}OH$, n*, m*' and n*' being integers, where the ratio m*'/n*' generally ranges between 0.1 and 10, preferably between 0.2 and 5, and n* ranges between 1 and 3, and the sum m*'+n*' ranging between 2 and 100, preferably between 2 and 60;

6. $M'OOC-CF_2O-(CF_2O)_{n'''}(CF_2CF_2O)_{m'''}CF_2COOM$, with M being a univalent cation such as $H^+$, $Na^+$, $K^+$, $NH_4^+$ and m''' and n''' being integers, where the ratio m'''/n''' generally ranges between 0.1 and 10, preferably between 0.2 and 5, and the sum m'''+n''' ranging between 2 and 100, preferably between 2 and 60

10. A process for the manufacture of the composition according to anyone of the preceding claims.

11. Use of the composition according to anyone of the preceding claims for the heat transfer.

**European Patent Office**

**EUROPEAN SEARCH REPORT**

Application Number

EP 07 11 3884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | US 5 785 882 A (YAMAMOTO YASUSHI [JP] ET AL) 28 July 1998 (1998-07-28) * the whole document * | 1,2,8-10 | INV. C09K5/10 |
| X | US 3 784 471 A (KAISER R) 8 January 1974 (1974-01-08) * the whole document * | 1-4,8-10 | |
| D,A | US 6 432 320 B1 (BONSIGNORE PATRICK [US] ET AL) 13 August 2002 (2002-08-13) * the whole document * | 1,10,11 | |
| D,A | US 2006/027484 A1 (LECK THOMAS J [US] ET AL) 9 February 2006 (2006-02-09) * paragraphs [0005] - [0009], [0054] * * claims; examples * | 1,10,11 | |
| A | LEE ET AL: "Assessment of the effectiveness of nanofluids for single-phase and two-phase heat transfer in micro-channels" INTERNATIONAL JOURNAL OF HEAT AND MASS TRANSFER, PERGAMON PRESS, GB, vol. 50, no. 3-4, 13 December 2006 (2006-12-13), pages 452-463, XP005802786 ISSN: 0017-9310 * page 454; table 1 * | 1,10,11 | TECHNICAL FIELDS SEARCHED (IPC) C09K |
| A | US 2006/278844 A1 (TUNG TSAI-SHIH [CN]) 14 December 2006 (2006-12-14) * claims * | 1,7,10,11 | |
| A | US 2007/158610 A1 (HONG HAIPING [US] ET AL) 12 July 2007 (2007-07-12) * claims * | 1,7,10,11 | |

-/--

The present search report has been drawn up for all claims

| Place of search | Date of completion of the search | Examiner |
|---|---|---|
| The Hague | 31 January 2008 | Puetz, Christine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 11 3884

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 564 277 A (SHISHIAI KK [JP]) 17 August 2005 (2005-08-17) * claims * | 1,10,11 | |
| A | US 2002/100578 A1 (WITHERS JAMES C [US] ET AL) 1 August 2002 (2002-08-01) * claims * | 1,7,10, 11 | |

TECHNICAL FIELDS SEARCHED (IPC)

The present search report has been drawn up for all claims

| Place of search | Date of completion of the search | Examiner |
|---|---|---|
| The Hague | 31 January 2008 | Puetz, Christine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 3884

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2008

| Patent document cited in search report | | Publication date | Patent family member(s) | | Publication date |
|---|---|---|---|---|---|
| US 5785882 | A | 28-07-1998 | DE | 19732823 A1 | 05-02-1998 |
| US 3784471 | A | 08-01-1974 | NONE | | |
| US 6432320 | B1 | 13-08-2002 | NONE | | |
| US 2006027484 | A1 | 09-02-2006 | AR | 055477 A1 | 22-08-2007 |
| | | | WO | 2006017571 A2 | 16-02-2006 |
| US 2006278844 | A1 | 14-12-2006 | CN | 1877239 A | 13-12-2006 |
| US 2007158610 | A1 | 12-07-2007 | NONE | | |
| EP 1564277 | A | 17-08-2005 | AT | 364072 T | 15-06-2007 |
| | | | AU | 2002344458 A1 | 07-06-2004 |
| | | | WO | 2004041956 A1 | 21-05-2004 |
| US 2002100578 | A1 | 01-08-2002 | CA | 2436218 A1 | 16-01-2003 |
| | | | EP | 1373430 A2 | 02-01-2004 |
| | | | JP | 2004538349 T | 24-12-2004 |
| | | | WO | 03004944 A2 | 16-01-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6432320 B, BONSIGNORE
- US 2006027484 A, DU PONT DE NEMOURS
- US 6106946 A, MATSUMOTO
- US 2004182099 A
- US 5785882 A
- US 5558803 A
- US 5487840 A
- US 6815063 B
- US 2007051916 A
- US 2005126756 A
- US 2006226564 A
- US 2006269823 A